# EUROPÄISCHE PATENTSCHRIFT

(11) **EP 1 832 012 B1**
(45) Veröffentlichungstag und Bekanntmachung des Hinweises auf die Patenterteilung: **05.01.2011**
(21) Anmeldenummer: 05826788.1
(22) Anmeldetag: 22.11.2005
(51) Int. Cl.: H04B 7/08

(54) **ANTENNENDIVERSITY-EINRICHTUNG**
ANTENNA DIVERSITY DEVICE
DISPOSITIF A DIVERSITE D'ANTENNE

(30) Priorität: 23.12.2004 DE 102004062000
(43) Veröffentlichungstag der Anmeldung: 12.09.2007
(73) Patentinhaber: Blaupunkt Antenna Systems GmbH & Co. KG, 31137 Hildesheim (DE)
(72) Erfinder: HOFFMEISTER, Markus, 38239 Salzgitter (DE)
(74) Vertreter: Flach, Dieter Rolf Paul
(86) Internationale Anmeldenummer: PCT/EP2005/056140
(87) Internationale Veröffentlichungsnummer: WO 2006/069858

(56) Entgegenhaltungen:
- EP-A- 1 056 221
- EP-A- 1 085 678
- US-B1- 6 522 642

## Beschreibung

### Stand der Technik

Bei Diversity-Antennenanordnungen werden die einzelnen Antennensignale einer Auswerteschaltung zugeführt zur Auswertung der Empfangsqualität der Signale. Meist wird das Summensignal aller Diversity-Antennensignale oder das stärkste Einzelsignal der Empfangsvorrichtung zugeführt (DE 101 09 359 C2).

In der Patentschrift US 6,522,642 B1 wird ein Empfängersystem für eine Diversity-Antenne mit einem einzigen Rückführkabel, das einen Empfänger an eine Mehrzahl von Antennen ankoppelt, offenbart.

In der Offenlegungsschrift EP 1 056 221 A2 wird ein Empfangssystem mit zwei Antenneneinheiten offenbart, die mit einem integrierten Empfänger über ein gemeinsames Koaxialkabel verbunden sind.

In der Offenlegungsschrift EP 1 085 678 A2 wird ein Radiokommunikationssystem offenbart, das ein Empfangssignal, das von einer Mehrzahl von Antennenelementen in einer Basisstation empfangen wurde, in ein Signal in einem dazu verschiedenen Frequenzband konvertiert und dann das konvertierte Signal zusammenfügt, um ein Zwischenträger-Wellen-Multiplex-Signal zu erhalten.

### Vorteile der Erfindung

Mit den Maßnahmen des Anspruchs 1, d.h. einer antennenseitigen Frequenzumsetzung, die mindestens ein Empfangsband einer Antenne so umsetzt, dass die Empfangsbänder der Diversity-Antennen bezüglich des Frequenzspektrums nebeneinander liegen, ist es möglich, mehrere Diversity-Antennensignale über ein gemeinsames Übertragungsmedium, insbesondere ein Koaxialkabel zu übertragen. Zur Frequenzumsetzung ist das Lokaloszillatorsignal eines an das gemeinsame Medium angeschlossenen Empfängers oder ein davon abgeleitetes Signal vorgesehen.

Bei der Erfindung ist nur noch ein Koaxialkabel notwendig.

Der Zusatzaufwand ist nicht sehr hoch. Es ist zwar antennenseitig ein Frequenzumsetzer und eine Frequenzweiche notwendig, aber da das Lokaloszillatorsignal des Empfängers zur Umsetzung genutzt wird, welches vorteilhaft ebenfalls über die Antennenzuleitung in Gegenrichtung zu den Signalen der Diversity-Antennen übertragen werden kann, erübrigt sich die Frequenzumsetzung des bereits antennenseitig umgesetzten Signals im Empfänger. Es kann antennenseitig direkt in die geforderte Zwischenfrequenzlage umgesetzt werden.

In den weiteren Unteransprüchen sind vorteilhafte Ausgestaltungen aufgezeigt.

### Zeichnungen

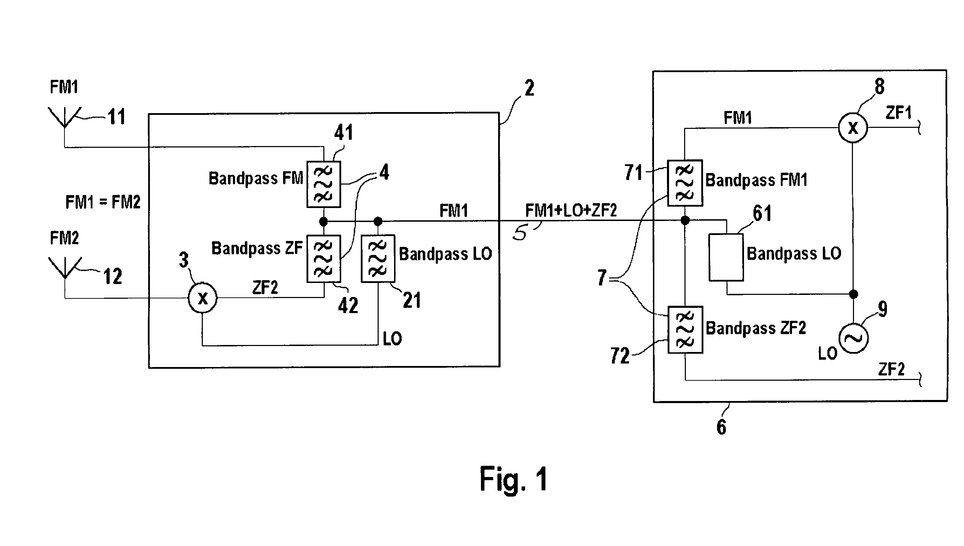

Anhand der Figur 1, die ein Blockschaltbild einer erfindungsgemäßen Einrichtung zeigt, werden Ausführungsbeispiele der Erfindung erläutert.

### Beschreibung von Ausführungsbeispielen

Wie in Figur 1 dargestellt, sind zwei Antennen 10 und 11 für einen Antennendiversity-Betrieb vorgesehen. Natürlich kann der Diversity-Betrieb und Verwendung des erfindungsgemäßen Prinzips auch mit mehr als zwei Antennen durchgeführt werden. Die Empfangsbänder der Antennen sind mit FM1 und FM2 bezeichnet. Bei AntennenDiversity-Betrieb sind die Empfangsbänder gleich. Eine Differenzierung in FM1 und FM2 erfolgt hier nur deshalb, um zu verdeutlichen, von welcher Antenne das jeweilige Empfangssignal kommt (FM1 von Antenne 11 und FM 2 von Antenne 12). Bezüglich des Pegels können die Empfangssignale natürlich voneinander abweichen, was gerade den Nutzen einer Diversity-Auswertung ausmacht.

Antennenseitig ist die Baueinheit 2 vorgesehen, mittels derer mindestens eines der Empfangsbänder FM1 oder FM2 so umgesetzt wird, dass die Frequenzbänder der Diversity-Antenne bezüglich des Frequenzspektrums nebeneinander liegen, d.h. sich frequenzmäßig nicht oder nur unwesentlich überlappen. Im Ausführungsbeispiel wird das Empfangsband FM2 der Antenne 12 mittels des Mischers 3 in die Zwischenfrequenzlage ZF2 umgesetzt. Das nicht umgesetzte Signal FM1 wird mit dem umgesetzten Signal ZF2 über die Frequenzweiche 4 zusammengeführt und gemeinsam über das Übertragungsmedium 5, vorzugsweise ein Koaxialkabel, zum Empfänger 6 bzw. eine Diversity-Signalauswertung, die dem Empfänger 6 beigeordnet sein kann oder in diesen integriert ist, übertragen. Die Frequenzweiche 4 besteht aus einem Bandpass 41 für das Signal FM1 und einem Bandpass 42 für das Signal ZF2. Im Empfänger 6 erfolgt über die Frequenzweiche 7 wieder eine Signalaufspaltung in die Einzelsignale FM1 und ZF2 mittels entsprechender Bandfilter 71 und 72. Das Signal ZF2 kann im Empfänger 6 ohne weitere Umsetzung weiterverarbeitet werden, wenn die Mischfrequenz für den Mischer 3 entsprechend gewählt wird. Das Signal FM1 wird im Empfänger 6 mittels dem Mischer 8 in die übliche Zwischenfrequenzlage ZF1 umgesetzt. Als Mischfrequenz des Mischers 8 dient das Ausgangssignal LO des Lokaloszillators 9.

Besonders vorteilhaft ist es als Mischfrequenz für den Mischer 3 das Ausgangssignal LO des Lokaloszillators 9 zu verwenden. Zu diesem Zweck wird das Signal LO über den Bandpass 61 in das Koaxialkabel 5 eingespeist in Gegenrichtung zu den von den Antennen 11 und 12 abgegriffenen und in der Baueinheit 2 aufbereiteten zum Empfänger 6 übertragenen Signalen FM1 und ZF2. Über den Bandpass 21 wird das LO-Signal antennenseitig ausgefiltert und steht als Mischsignal für den Mischer 3 zur Verfügung.

Bei mehr als zwei Antennen können die weiteren Signale ebenfalls ohne großen Aufwand umgesetzt werden, damit sie im Frequenzspektrum neben den anderen Diversity-Signalen zu liegen kommen. Die dazu notwendigen Umsetzfrequenzen können einfach aus dem LO-Signal durch Teilung oder Vervielfachung abgeleitet werden. Die Frequenzteilung/Vervielfachung wird vorteilhafter Weise erst in der Einheit 2 vorgenommen, um den Filteraufwand zu begrenzen. Es sind dann gegebenenfalls noch weitere FilterBandpasseinrichtungen notwendig.

Das Filter bzw. der Bandpass 42 für die ZF ist fest in seiner Frequenz. Dies gilt bei geeigneter Wahl der ZF, z.B. 30 MHz, d.h. bei einer FM-Frequenz 88-108 MHz einer LO-Frequenz 78-58 MHz, auch für die Filter bzw. Bandpass 41 für FM und Bandpass 21 bzw. 61 für LO. Wird die ZF geringer gewählt, etwa wie heute üblich 10 MHz, d.h. bei einer FM-Frequenz 88-108 MHz und einer LO-Frequenz 98-78 MHz, müssen die entsprechenden Filter abstimmbar sein.

## Patentansprüche

1. Antennendiversity-Einrichtung mit mehreren Antennen (11, 12), mit einem Empfänger (6) und einer antennenseitigen Frequenzumsetzung (3), die mindestens ein Empfangsband einer Antenne (12) so umsetzt, dass die Empfangsbänder der Diversity-Antennen (11, 12) bezüglich des Frequenzspektrums nebeneinander zu liegen kommen und über ein gemeinsames Übertragungsmedium (5), insbesondere über ein Koaxialkabel, übertragbar sind und dass zur Frequenzumsetzung das Lokaloszillatorsignal des an das gemeinsame Medium (5) angeschlossenen Empfängers (6) oder ein davon abgeleitetes Signal vorgesehen ist.

2. Einrichtung nach Anspruch 1, **dadurch gekennzeichnet, dass** eines der Diversity-Antennensignale ohne weitere Frequenzumsetzung zusammen mit einem frequenzmäßig umgesetzten weiteren Diversity-Antennensignal über eine Frequenzweiche (4) zum gemeinsamen Medium (5) geführt ist.

3. Einrichtung nach Anspruch 1 oder 2, **dadurch gekennzeichnet, dass** das Lokaloszillatorsignal in Gegenrichtung zu den Signalen der Diversity-Antennen auf das gemeinsame Medium (5) einspeisbar ist.

4. Einrichtung nach einem der Ansprüche 1 bis 3, **dadurch gekennzeichnet, dass** empfangsseitig eine Zwischenfrequenzumsetzung (8) nur jenes Antennendiversity-Signals vorgesehen ist, das nicht bereits antennenseitig einer Frequenzumsetzung unterzogen wurde.

5. Einrichtung nach einem der vorhergehenden Ansprüche, **dadurch gekennzeichnet, dass** bei mehr als zwei Diversity-Antennen für jedes weitere antennenseitig umzusetzende Empfangsband die zugehörige Umsetzfrequenz aus dem Lokaloszillatorsignal des Empfängers (6) abgeleitet wird, z.B. durch Frequenzteilung oder Vervielfachung.

## Claims

1. Antenna diversity device comprising a plurality of diversity antennas (11, 12), comprising a receiver (6) and a frequency converter (3), which is situated on the antenna side and converts at least one receive band of an antenna (12) in such a way that the receive bands of the diversity antennas (11, 12) come to be adjacent in terms of the frequency spectrum and are transmissible via a shared transmission medium (5), in particular a coaxial cable, and that the local oscillator signal of the receiver (6) connected to the shared medium (5) or a signal derived therefrom is provided for the frequency conversion.

2. Device according to claim 1, **characterised in that** one of the diversity antenna signals is supplied to the shared medium (5) via a diplexer (4), without additional frequency conversion, together with another, frequency-converted diversity antenna signal.

3. Device according to either claim 1 or claim 2, **characterised in that** the local oscillator signal can be fed to the shared medium (5) in the opposite direction from the signals of the diversity antennas.

4. Device according to any one of claims 1 to 3, **characterised in that** an intermediate frequency conversion (8), of only the antenna diversity signal which has not already been subjected to a frequency conversion on the antenna side, is provided on the receiver side.

5. Device according to any one of the preceding claims, **characterised in that** if there are more than two diversity antennas for each additional receive band to be converted on the antenna side, the associated conversion frequency is derived from the local oscillator signal of the receiver (6), for example by frequency division or multiplication.

## Revendications

1. Dispositif à diversité d'antenne comprenant plusieurs antennes (11, 12), comprenant un récepteur (6) et un convertisseur de fréquence (3) du côté antenne, qui convertit au moins une bande de réception d'une antenne (12) de telle façon que les bandes de réception des antennes en diversité (11, 12) viennent se placer les unes à côté des autres pour ce qui concerne le spectre de fréquences et peuvent être transmises via un support de transmission commun (5) en particulier un câble coaxial, et que pour la conversion de fréquence il est prévu le signal oscillateur local du récepteur (6) connecté au support commun (5) ou un signal dérivé de celui-ci.

2. Dispositif selon la revendication 1, **caractérisé en ce que** l'un des signaux d'antenne en diversité est amené, sans autre conversion de fréquence, vers le support commun (5) via un filtre de fréquence (4), conjointement avec un autre signal d'antenne en diversité converti en fréquence.

3. Dispositif selon la revendication 1 ou 2, **caractérisé en ce que** le signal d'oscillateur local peut être injecté en sens inverse aux signaux des antennes en diversité vers le support commun (5).

4. Dispositif selon l'une des revendications 1 à 3, **caractérisée en ce qu'**il est prévu du côté réception une conversion de fréquence intermédiaire (8) uniquement pour celui des signaux à diversité d'antenne qui n'a pas déjà été soumis à une conversion de fréquence du côté antenne.

5. Dispositif selon l'une des revendications précédentes, **caractérisé en ce que**, pour plus de deux antennes en diversité, pour chaque autre bande de réception à convertir du côté antenne, la fréquence de conversion associée est dérivée à partir du signal oscillateur local du récepteur (6), par exemple par division ou multiplication de fréquence.
